# FASCICULE DE BREVET EUROPEEN

(11) **EP 3 956 175 B1**
(45) Date de publication et mention de la délivrance du brevet: **05.07.2023**
(21) Numéro de dépôt: 20725817.9
(22) Date de dépôt: 04.03.2020
(51) Int. Cl.: B60Q 1/50

(54) **VÉHICULE AVEC DISPOSITIF D'ALERTE VISUELLE D'UN FRANCHISSEMENT INVOLONTAIRE D'UNE LIGNE DE MARQUAGE DE LA VOIE DE CIRCULATION DU VEHICULE; PROCÉDÉ D'ALERTE ASSOCIÉ**
KRAFTFAHRZEUG MIT VORRICHTUNG ZUR OPTISCHEN WARNUNG EINES UNGEWOLLTEN ÜBERSCHREITENS EINER FAHRBAHNMARKIERUNGSLINIE UND ENTSPRECHENDES WARNVERFAHREN
VEHICLE WITH A DEVICE FOR VISUALLY WARNING OF AN UNINTENTIONAL CROSSING OF A ROADWAY MARKING LINE, AND ASSOCIATED WARNING METHOD

(30) Priorité: 15.04.2019 FR 1903994
(43) Date de publication de la demande: 23.02.2022
(73) Titulaire: PSA Automobiles SA, 78300 Poissy (FR)
(72) Inventeur: BERREUR, Jean Charles, 94800 VILLEJUIF (FR); JACQUEMARD, Ivan, 92130 ISSY LES MOULINEAUX (FR)
(86) Numéro de dépôt international: PCT/FR2020/050427
(87) Numéro de publication internationale: WO 2020/212668

(56) Documents cités:
- JP-A- 2010 026 759
- US-A1- 2013 058 116
- US-A1- 2018 093 607

## Description

### [Domaine technique]

La présente invention concerne d'une manière générale les dispositifs d'alerte d'un franchissement involontaire d'une ligne de marquage de la voie de circulation d'un véhicule automobile.

### [Technique antérieure]

On entend ici par ligne un marquage, une ligne continue ou discontinue tracée sur une route et délimitant un côté d'une voie de circulation sur laquelle un véhicule est autorisé à circuler.

Il est bien connu de l'art antérieur d'équiper certains véhicules automobiles d'un dispositif d'alerte d'un franchissement involontaire de ligne de voie de circulation, dénommé couramment sous l'acronyme AFIL.

Un tel dispositif comporte classiquement une caméra vidéo capturant en continu l'environnement avant du véhicule et associée à des moyens de traitement et d'analyse aptes à détecter les lignes de marquage délimitant la voie de circulation du véhicule, une unité de commande apte à estimer la trajectoire du véhicule via des données transmises par différents capteurs du véhicule mesurant notamment la vitesse instantanée et l'angle de lacet du véhicule.

Cette unité de commande est configurée pour déclencher l'émission par des moyens d'avertissement d'une alerte à destination du conducteur en cas de détection d'un franchissement imminent de l'une des lignes de marquage de la voie de circulation de ce véhicule lorsque l'indicateur de changement de direction situé du côté correspondant à cette ligne n'est pas activé.

Dans les dispositifs connus, et notamment dans ceux qui sont décrits dans les documents FR 2 899 172A et US 2004/049323A, les moyens d'avertissement sont agencés pour avertir le conducteur via un message audio spécifique et/ou des vibrations dans le siège sur lequel il est installé ou sur la colonne de direction et le volant du véhicule qu'il tient.

Il est également connu d'afficher, à destination du conducteur, un message d'avertissement visuel sur l'un des écrans du véhicule.

Le document JP 2010-26759A divulgue de projeter sur la route et au devant du véhicule une image comprenant une signalétique d'alerte textuelle et/ou sous forme de pictogramme.

Tous ces dispositifs d'alerte d'un franchissement involontaire de ligne de voie de circulation sont uniquement à destination du conducteur ou des passagers du véhicule concerné et ne permettent pas de prévenir les autres usagers de la route situés dans l'environnement de ce véhicule (automobilistes, deux-roues et piétons).

### [Exposé de l'invention]

La présente invention vise à améliorer la sécurité de ces usagers.

Elle propose à cet effet un véhicule automobile avec dispositif d'alerte visuelle d'un franchissement involontaire d'une ligne de marquage de la voie de circulation du véhicule roulant sur une route, ledit dispositif comportant des moyens d'acquisition vidéo associés à des moyens de traitement et d'analyse pour détecter les lignes de marquage délimitant ladite voie de circulation, des moyens d'avertissement visuels aptes à projeter sur la route une image comprenant une signalétique d'alerte, ainsi qu'une unité de commande apte à estimer la trajectoire du véhicule et configurée pour déclencher l'émission de ladite signalétique d'alerte en cas de détection d'un franchissement imminent d'au moins l'une desdites lignes de marquage de la voie de circulation de ce véhicule lorsque l'indicateur de changement de direction situé du côté correspondant à cette ligne n'est pas activé ; caractérisé en ce que lesdits moyens de d'avertissement sont configurés pour projeter ladite image sur la portion de ladite route jouxtant latéralement ledit véhicule du côté correspondant à cette ligne.

La projection d'une telle image, comprenant une signalétique d'alerte sur le côté de la route correspondant à la ligne de marquage s'apprêtant à être franchie de manière involontaire par le véhicule, permet d'avertir les autres usagers de la route situé dans l'environnement de ce véhicule du danger, de sorte à renforcer leur niveau de vigilance et à adapter leur comportement en conséquence.

Selon des caractéristiques préférées dudit véhicule selon l'invention :
- lesdits moyens d'avertissement comportent au moins des premiers moyens de projection implantés sur l'un des flancs latéraux extérieurs dudit véhicule ;
- les au moins dits premiers moyens de projection sont implantés sur le flanc latéral extérieur côté conducteur dudit véhicule ;
- les au moins dits premiers moyens de projection sont ménagés en partie basse du rétroviseur ;
- les au moins dits premiers moyens de projection sont ménagés au niveau du bas de caisse du véhicule ;
- les au moins dits premiers moyens de projection sont constitués par un vidéoprojecteur miniature ;
- les au moins dits premiers moyens de projection sont constitués par un projecteur associé à une diapositive transparente sur laquelle est représentée l'image comprenant la signalétique visuelle d'alerte ;
- lesdits moyens d'avertissement comportent également des seconds moyens de projection implantés de manière symétrique auxdits premiers moyens de projections sur le flanc latéral extérieur côté passager avant du véhicule ; et/ou
- ladite image projetée est anamorphosée pour compenser l'angle d'inclinaison du chemin optique par rapport à la route.

L'invention vise également sous un deuxième aspect, un procédé d'alerte en cas de franchissement involontaire d'une ligne de marquage de la voie de circulation d'un véhicule automobile roulant sur une route, ledit procédé comportant les étapes de détection, en se basant sur le positionnement des lignes de marquage de ladite voie de circulation du véhicule ainsi que sur la trajectoire estimée de ce véhicule, de l'imminence d'un franchissement d'une dite ligne de marquage alors que l'indicateur de changement de direction situé du côté correspondant à cette ligne n'est pas activé, et de projection d'une image comprenant une signalétique d'alerte sur la portion de la route jouxtant latéralement ledit véhicule du côté correspondant à cette ligne.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] illustre un véhicule équipé du dispositif d'alerte selon l'invention, roulant sur une voie de circulation d'une route et s'apprêtant à franchir involontairement la ligne de marquage gauche de sa voie pour venir empiéter sur une autre voie de circulation ;
[Fig 2] représente le schéma fonctionnel du dispositif d'alerte selon l'invention ;
[Fig 3] est un organigramme du procédé selon l'invention ;
[Fig 4] illustre un premier exemple de la signalétique visuelle d'alerte projetée par le dispositif selon l'invention sur la portion de la route jouxtant latéralement le véhicule du côté correspondant au franchissement ; et
[Fig 5] illustre un deuxième exemple de la signalétique visuelle d'alerte projetée par le dispositif selon l'invention sur la portion de la route jouxtant latéralement le véhicule du côté correspondant au franchissement.

### [Description détaillée]

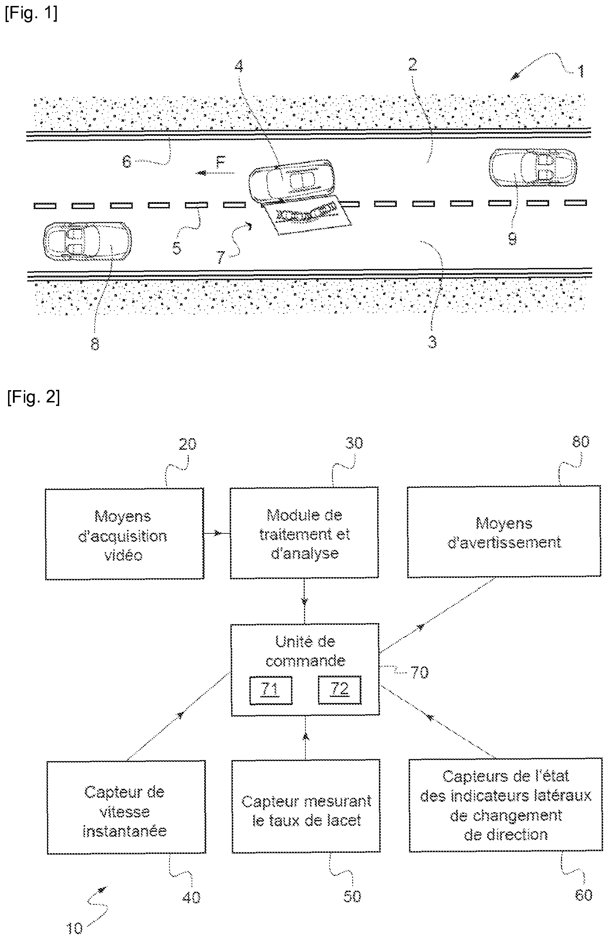

La figure 1 illustre schématiquement un tronçon d'une route à double sens de circulation 1 comportant deux voies de circulation 2, 3 accolées l'une à l'autre.

Un premier véhicule 4 roulant sur la voie de circulation 2 dans la direction représentée par la flèche F s'apprête à franchir la ligne discontinue de marquage gauche 5 de sa voie 2 pour venir empiéter sur la voie à sens inverse de circulation 3.

Le véhicule 4 est équipé d'un dispositif 10 d'alerte visuelle d'un franchissement involontaire d'une ligne de marquage de la voie de circulation selon l'invention dont le schéma fonctionnel est représenté sur la figure 2.

Ce dispositif 10 comporte des moyens d'acquisition vidéo 20 constitués ici par une unique caméra implantée à l'avant du véhicule et capturant en continu l'environnement avant du véhicule 4, un module de traitement et d'analyse 30 des images capturées par cette caméra 20, un capteur 40 mesurant la vitesse instantanée du véhicule 5, un capteur 50 de mesure du taux de lacet du véhicule 4, des capteurs 60 de l'état des indicateurs latéraux de changement de direction (clignotants) du véhicule 4, une unité de commande 70 ainsi que des moyens d'avertissement 80 visuels.

Implantée avantageusement sur l'axe longitudinal médian du véhicule 4 en arrière du pare-brise et à proximité du rétroviseur intérieur, la caméra 20 comprend un capteur optique de type CCD (acronyme en langue anglaise de « Charge-Coupled Device » se traduisant en français par « dispositif à couplage de charge ») ou CMOS (acronyme en langue anglaise de « Complementary Metal-Oxide Semiconductor » se traduisant en français par « semi-conducteur à oxyde de métal complémentaire »).

La caméra 20 n'est pas nécessairement spécifique au dispositif d'alerte selon l'invention 10 mais peut constituer également l'un des éléments d'un dispositif complémentaire tel que par exemple un système de freinage automatique dont l'objectif est d'éviter une collision avec un obstacle situé à l'avant du véhicule 4. Une telle mutualisation des moyens d'acquisition vidéo permet ainsi de réduire le coût de revient du dispositif 10.

Selon des variantes non représentées, la caméra peut être implantée en un autre endroit du véhicule 4, par exemple au niveau de son pare-choc avant.

Selon d'autres variantes de réalisation de l'invention, les moyens d'acquisition vidéo du dispositif peuvent comporter deux caméras disposées des deux côtés avant du véhicule, par exemple au niveau des rétroviseurs.

Avantageusement intégré à la caméra 20 ou dissocié de cette dernière, le module de traitement et d'analyse 30 est apte à détecter en temps réel et par l'intermédiaire de différents algorithmes de reconnaissance, les lignes de marquage 5, 6 délimitant la voie de circulation 2 du véhicule 4 à partir des images transmises par la caméra 20.

Les données recueillies par le module de traitement et d'analyse 30, les capteurs de vitesse 40, de taux de lacet 50 et d'état des indicateurs latéraux de changement de direction 60 sont acheminées en temps réel vers l'unité de commande 70 à laquelle ces derniers sont reliés.

Les moyens d'avertissement visuels 80 comportent au moins des premiers moyens de projection implantés sur le flanc latéral extérieur côté conducteur du véhicule, avantageusement en partie basse du rétroviseur ou au niveau du bas de caisse du véhicule à proximité du passage de roue avant.

Constitués de préférence par un vidéoprojecteur miniature, ces premiers moyens de projection sont configurés pour projeter, sur la portion de la route jouxtant latéralement le véhicule 4 du côté correspondant à la ligne de marquage 5 et en réponse à un signal transmis par l'unité de commande 70, une image 7 comprenant un signalétique visuelle d'alerte.

De manière avantageuse, les moyens d'avertissement visuels 80 du dispositif selon l'invention comportent également des seconds moyens de projection implantés de manière symétrique aux premiers moyens de projection sur le flanc latéral extérieur côté passager avant du véhicule, ces seconds moyens de projection étant configurés pour projeter, sur la portion de la route jouxtant latéralement le véhicule 4 du côté correspondant à la ligne de marquage 6 et en réponse à un signal transmis par l'unité de commande 70, une image semblable à l'image 7 et comprenant un signalétique visuelle d'alerte.

Les moyens de projection ne sont pas nécessairement spécifiques au dispositif selon l'invention 10, mais peuvent constituer également l'un des éléments d'un dispositif complémentaire tel que par exemple un système d'éclairage d'accueil destiné à accompagner le conducteur dans ses phases d'approche ou d'éloignement du véhicule. De la même manière que pour la caméra, une telle mutualisation de ces moyens de projection permet de réduire le coût de revient du dispositif 10.

Avantageusement, l'image projetée par les moyens de projections est anamorphosée, c'est-à-dire déformée par rapport à sa projection visible sur le sol pour compenser l'angle d'inclinaison du chemin optique par rapport à la route et de sorte à améliorer la lisibilité de signalétique d'alerte pour les usagers de la route situés dans l'environnement du véhicule.

En variante, les moyens de projections peuvent être constitués par un simple projecteur miniature associé à une diapositive transparente sur laquelle est représentée l'image comprenant la signalétique visuelle d'alerte. Un tel projecteur peut par exemple comprendre une diode électroluminescente ou laser de puissance, blanche ou colorée, et associée à au moins une lentille convergente.

De manière avantageuse, les moyens d'avertissement visuels 80 sont également aptes à solliciter le conducteur via les différents moyens d'interaction homme machine (IHM) de type visuel, sonore, et/ou haptique dont est équipé le véhicule.

Les moyens d'interaction visuels peuvent par exemple être constitués par l'écran d'affichage tactile du dispositif d'info-divertissement intégré à la console centrale de la planche de bord, par celui du combiné d'instruments, et/ou par celui du dispositif d'affichage tête haute lorsque le véhicule en est équipé. Les moyens d'interaction sonores sont formés classiquement par les hauts parleurs du système d'info-divertissement et/ou par une alarme système indépendante. Les moyens d'interaction haptiques consistent avantageusement en une pluralité de vibreurs implantés dans le siège conducteur ou dans le volant.

Les sollicitations consistent par exemple en l'affichage d'un témoin lumineux, l'affichage d'un message textuel informatif ou d'alerte, l'émission d'un signal sonore, l'émission d'un message vocal informatif ou d'alerte, et/ou l'activation des vibreurs.

L'unité de commande 70 comporte un calculateur 71 et un module de stockage 72 qui comprend de la mémoire non volatile de type EEPROM ou FLASH et de la mémoire vive.

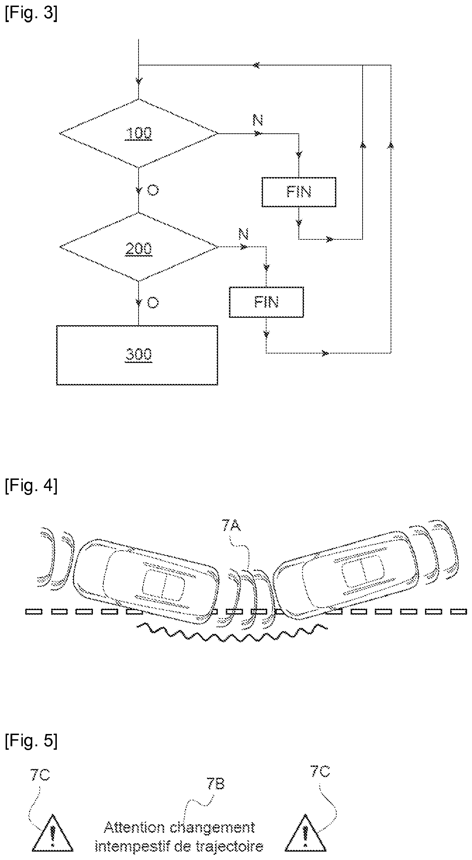

La mémoire non volatile stocke un processus d'alerte visuelle en cas de franchissement involontaire d'une ligne de marquage de la voie de circulation du véhicule 4, qui est mis en oeuvre dans cette unité 70 et dont l'organigramme est représenté sur la figure 3.

Selon un mode préféré de réalisation, l'ensemble des informations contenues dans cette mémoire non volatile peut être mis à jour par des moyens de communication ou des moyens de lecture d'un support de données.

On va maintenant décrire en détails et à l'appui de l'organigramme de cette figure 3, les différentes étapes de ce procédé qui est mis en oeuvre de manière périodique suivant une période prédéterminée comprise de préférence entre 50 et 200 millisecondes et par exemple égale à 100 millisecondes.

Celui-ci est initié à l'étape 100 au cours de laquelle l'unité de commande 70 vérifie, en se basant sur le positionnement des lignes de marquage de la voie de circulation du véhicule 4 transmis par le module de traitement et d'analyse 30 ainsi que sur la trajectoire du véhicule estimée à partir des données de vitesse et de taux de lacet transmises par les capteurs 40 et 50, l'imminence d'un franchissement d'une ligne de marquage 5 de la voie 2.

Dans l'affirmative, le processus selon l'invention vérifie ensuite, à partir des données reçues en provenance du capteur d'état des indicateurs latéraux de changement de direction 60, si l'indicateur latéral situé du côté correspondant à cette ligne de marquage 5 est bien activé (étape 200).

Si tel n'est pas le cas, l'unité de commande 70 estime que le franchissement de la ligne de marquage 5 est involontaire, et transmet donc aux moyens d'avertissement 80, l'ordre de projeter l'image 7 contenant la signalétique visuelle d'alerte sur la portion de la route 1 jouxtant le véhicule du côté correspondant à cette ligne de marquage 5 (étape 300), tel qu'illustré sur la figure 1 où cette signalétique se présente sous la forme d'un pictogramme 7A représentatif du danger encouru par les usagers de la route (ce pictogramme étant mieux visible sur la figure 4.

La projection de cette image permet ainsi d'avertir du danger les autres usagers de la route situé dans l'environnement de ce véhicule (non seulement ceux situés sur la voie de circulation 3 à sens inverse de circulation tel que le véhicule 8 sur la figure 1, mais également ceux situés sur la voie 2 en arrière du véhicule 4 tel que le véhicule 9 sur la figure 1, de sorte à renforcer leur niveau de vigilance et à adapter leur comportement en conséquence.

En variante, cette signalétique visuelle d'alerte peut être de type différent et comporter par exemple un message textuel 7B associé à un ou plusieurs pictogrammes 7C tel qu'illustré par l'exemple de la figure 5. :

## Revendications

1. Véhicule automobile (4) avec dispositif d'alerte visuelle d'un franchissement involontaire d'une ligne de marquage (5) de la voie de circulation (2) du véhicule (4) roulant sur une route (1), ledit dispositif comportant des moyens d'acquisition vidéo (20) associés à des moyens de traitement et d'analyse (30) pour détecter les lignes de marquage (5, 6) délimitant ladite voie de circulation (2), des moyens d'avertissement visuels (80) aptes à projeter sur la route (1) une image (7) comprenant une signalétique d'alerte (7A, 7B , 7C), ainsi qu'une unité de commande (70) apte à estimer la trajectoire du véhicule (4) et configurée pour déclencher l'émission de ladite signalétique d'alerte en cas de détection d'un franchissement imminent d'au moins l'une (5) desdites lignes de marquage (5, 6) de la voie de circulation (2) du véhicule (4) lorsque l'indicateur de changement de direction situé du côté correspondant à cette ligne (5) n'est pas activé ; **caractérisé en ce que** lesdits moyens d'avertissement (80) sont configurés pour projeter ladite image (7) sur la portion de ladite route (1) jouxtant latéralement le véhicule (4) du côté correspondant à cette ligne (5).

2. Véhicule selon la revendication 1, **caractérisé en ce que** lesdits moyens d'avertissement (80) comportent au moins des premiers moyens de projection implantés sur l'un des flancs latéraux extérieur du véhicule (4).

3. Véhicule selon la revendication 2, **caractérisé en ce que** les au moins dits premiers moyens de projection sont implantés sur le flanc latéral extérieur côté conducteur du véhicule (4).

4. Véhicule selon l'une des revendications 2 ou 3, **caractérisé en ce que** les au moins dits premiers moyens de projection sont ménagés en partie basse du rétroviseur.

5. Véhicule selon l'une des revendications 2 ou 3, **caractérisé en ce que** les au moins dits premiers moyens de projection sont ménagés au niveau du bas de caisse du véhicule.

6. Véhicule selon l'une des revendications 2 à 5, **caractérisé en ce que** les au moins dits premiers moyens de projection sont constitués par un vidéoprojecteur miniature.

7. Véhicule selon l'une des revendications 2 à 5, **caractérisé en ce que** les au moins dits premiers moyens de projection sont constitués par un projecteur associé à une diapositive transparente sur laquelle est représentée l'image comprenant la signalétique visuelle d'alerte.

8. Véhicule selon l'une des revendications 2 à 7 pris en combinaison avec la revendication 3, **caractérisé en ce que** lesdits moyens d'avertissement (80) comportent également des seconds moyens de projection implantés de manière symétrique auxdits premiers moyens de projections sur le flanc latéral extérieur côté passager avant du véhicule.

9. Véhicule selon l'une des revendications 1 à 8, **caractérisé en ce que** ladite image projetée (7) est anamorphosée pour compenser l'angle d'inclinaison du chemin optique par rapport à la route.

10. Procédé d'alerte visuelle en cas de franchissement involontaire d'une ligne de marquage (5) de la voie de circulation (2) d'un véhicule automobile (4) roulant sur une route (1), ledit procédé comportant les étapes suivantes :
- détection, en se basant sur le positionnement des lignes de marquage (5, 6) de ladite voie de circulation (2) du véhicule (4) ainsi que sur la trajectoire estimée de ce véhicule, de l'imminence d'un franchissement d'une dite ligne de marquage (5) alors que l'indicateur de changement de direction situé du côté correspondant à cette ligne n'est pas activé;
- projection d'une image (7) comprenant une signalétique d'alerte (7A, 7B, 7C) sur la portion de la route (1) jouxtant latéralement ledit véhicule (4) du côté correspondant à cette ligne (5).

## Patentansprüche

1. [Patentanspruch 1] Kraftfahrzeug (4) mit einer Vorrichtung zur visuellen Warnung vor einem unbeabsichtigten Überschreiten einer Markierungslinie (5) der Fahrspur (2) des auf einer Straße (1) fahrenden Fahrzeugs (4), wobei die Vorrichtung Videoerfassungsmittel (20), die mit Verarbeitungs- und Analysemitteln (30) verbunden sind, um die die Fahrspur (2) begrenzenden Markierungslinien (5, 6) zu erfassen, visuelle Warnmittel (80), die geeignet sind, auf die Straße (1) ein Bild (7) zu projizieren, das eine Warnbeschilderung (7A, 7B, 7C), sowie eine Steuereinheit (70), die geeignet ist, den Weg des Fahrzeugs (4) abzuschätzen, und konfiguriert ist, um die Ausgabe des Warnzeichens auszulösen, wenn ein bevorstehendes Überfahren von mindestens einer (5) der Markierungslinien (5, 6) der Fahrspur (2) des Fahrzeugs (4) erfasst wird, wenn der Abbiegeindikator, der sich auf der dieser Linie (5) entsprechenden Seite befindet, nicht aktiviert ist; **dadurch gekennzeichnet, dass** die Warnmittel (80) so konfiguriert sind, dass sie das Bild (7) auf den Teil der Straße (1) projizieren, der seitlich an das Fahrzeug (4) auf der dieser Linie (5) entsprechenden Seite angrenzt.

2. Fahrzeug nach Anspruch 1, **dadurch gekennzeichnet, dass** die Warnmittel (80) mindestens erste Projektionsmittel umfassen, die an einer der äußeren Seitenflanken des Fahrzeugs (4) implantiert sind.

3. Fahrzeug nach Anspruch 2, **dadurch gekennzeichnet, dass** die mindestens einen ersten Projektionsmittel auf der äußeren fahrerseitigen Seitenwand des Fahrzeugs (4) implantiert sind.

4. Fahrzeug nach einem der Ansprüche 2 oder 3, **dadurch gekennzeichnet, dass** die mindestens einen ersten Projektionsmittel im unteren Teil des Spiegels angeordnet sind.

5. Fahrzeug nach einem der Ansprüche 2 oder 3, **dadurch gekennzeichnet, dass** die mindestens einen ersten Projektionsmittel im Bereich des Unterbodens des Fahrzeugs angeordnet sind.

6. Fahrzeug nach einem der Ansprüche 2 bis 5, **dadurch gekennzeichnet, dass** die mindestens einen ersten Projektionsmittel durch einen Miniaturbeamer gebildet werden.

7. Fahrzeug nach einem der Ansprüche 2 bis 5, **dadurch gekennzeichnet, dass** die mindestens ersten Projektionsmittel aus einem Projektor bestehen, der mit einem transparenten Dia verbunden ist, auf dem das Bild dargestellt ist, das die visuelle Warnbeschilderung umfasst.

8. Fahrzeug nach einem der Ansprüche 2 bis 7 in Verbindung mit Anspruch 3, **dadurch gekennzeichnet, dass** die Warnmittel (80) auch zweite Projektionsmittel umfassen, die symmetrisch zu den ersten Projektionsmitteln an der äußeren Seitenwand auf der Beifahrerseite des Fahrzeugs angebracht sind.

9. Fahrzeug nach einem der Ansprüche 1 bis 8, **dadurch gekennzeichnet, dass** das projizierte Bild (7) anamorphotisch ist, um den Neigungswinkel des Lichtwegs in Bezug auf die Straße zu kompensieren.

10. Verfahren zur visuellen Warnung vor dem unbeabsichtigten Überfahren einer Markierungslinie (5) der Fahrspur (2) eines auf einer Straße (1) fahrenden Kraftfahrzeugs (4), wobei das Verfahren die folgenden Schritte umfasst:
- Erkennung, basierend auf der Positionierung der Markierungslinien (5, 6) der genannten Fahrspur (2) des Fahrzeugs (4) sowie auf der geschätzten Trajektorie dieses Fahrzeugs, des bevorstehenden Überfahrens einer genannten Markierungslinie (5), während der Richtungsänderungsanzeiger, der sich auf der dieser Linie entsprechenden Seite befindet, nicht aktiviert ist;
- Projizieren eines Bildes (7) mit einer Warnmarkierung (7A, 7B, 7C) auf den Abschnitt der Straße (1), der seitlich an das Fahrzeug (4) auf der Seite angrenzt, die dieser Linie (5) entspricht.

## Claims

1. Motor vehicle (4) with a device for visual warning of an involuntary crossing of a marking line (5) of the traffic lane (2) of the vehicle (4) travelling on a road (1), said device comprising video acquisition means (20) associated with processing and analysis means (30) for detecting the marking lines (5, 6) delimiting said traffic lane (2), visual warning means (80) capable of projecting onto the road (1) an image (7) comprising a warning sign (7A, 7B, 7C), as well as a control unit (70) capable of estimating the trajectory of the vehicle (4) and configured to trigger the emission of said warning signal in the event of detection of an imminent crossing of at least one (5) of said marking lines (5, 6) of the traffic lane (2) of the vehicle (4) when the direction change indicator located on the side corresponding to this line (5) is not activated ; **characterized in that** said warning means (80) are configured to project said image (7) onto the portion of said road (1) laterally adjoining the vehicle (4) on the side corresponding to that line (5).

2. Vehicle according to claim 1, **characterized in that** said warning means (80) comprise at least first projection means located on one of the outer lateral sides of the vehicle (4).

3. Vehicle according to claim 2, **characterized in that** said at least first projection means are implanted on the driver's side external lateral side of the vehicle (4).

4. Vehicle according to one of claims 2 or 3, **characterized in that** said at least first projection means are provided in the lower part of the rearview mirror.

5. Vehicle according to one of claims 2 or 3, **characterized in that** said at least first projection means are provided at the level of the lower part of the vehicle body.

6. Vehicle according to one of claims 2 to 5, **characterized in that** said at least first projection means are constituted by a miniature video projector.

7. Vehicle according to one of claims 2 to 5, **characterized in that** said at least first projection means are constituted by a projector associated with a transparent slide on which is represented the image comprising the visual warning signal.

8. Vehicle according to one of claims 2 to 7, taken in combination with claim 3, **characterized in that** said warning means (80) also comprise second projection means implanted symmetrically to said first projection means on the front passenger side exterior lateral flank of the vehicle.

9. Vehicle according to one of claims 1 to 8, **characterized in that** said projected image (7) is anamorphosed to compensate for the angle of inclination of the optical path with respect to the road.

10. A method of visually alerting in case of unintentional crossing of a marking line (5) of the traffic lane (2) of a motor vehicle (4) driving on a road (1), said method comprising the following steps:
- detection, based on the positioning of the marking lines (5, 6) of said traffic lane (2) of the vehicle (4) as well as on the estimated trajectory of this vehicle, of the imminence of a crossing of a said marking line (5) while the direction change indicator located on the side corresponding to this line is not activated
- projection of an image (7) comprising a warning sign (7A, 7B, 7C) on the portion of the road (1) laterally adjoining said vehicle (4) on the side corresponding to this line (5).
